(19) Europäisches Patentamt European Patent Office Office européen des brevets

(11) **EP 1 770 719 A2**

(12) **EUROPEAN PATENT APPLICATION**

(43) Date of publication:
**04.04.2007 Bulletin 2007/14**

(51) Int Cl.:
**G21K 4/00** (2006.01)

(21) Application number: **06119281.1**

(22) Date of filing: **22.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.09.2005 EP 05109079**

(71) Applicant: **AGFA-GEVAERT**
**2640 Mortsel (BE)**

(72) Inventors:
• **Leblans, Paul**
  **AGFA-GEVAERT**
  **2640 Mortsel (BE)**
• **Mans, Ilse**
  **AGFA-GEVAERT**
  **2640 Mortsel (BE)**
• **Van den Bergh, Rudy**
  **AGFA-GEVAERT**
  **2640 Mortsel (BE)**
• **Tahon, Jean-Pierre**
  **AGFA-GEVAERT**
  **2640 Mortsel (BE)**
• **Meeusen, Martine**
  **AGFA-GEVAERT**
  **2640 Mortsel (BE)**

(54) **Radiation image storage panel suitable for use in mammographic applications provided with a particular top-coat.**

(57)    A photostimulable storage phosphor screen or panel suitable for use in mammographic applications comprises on a support, a storage phosphor layer and, adjacent thereto, an outermost top-coat layer, wherein said outermost top-coat layer has a roughness profile such that a mean or average spacing $S_m$ between peaks as measured by means of a perthometer following profile peaks and valleys of said top-coat is less than 150 $\mu$m, said spacing being defined by downward crossing of a mean line, followed by upward crossing up to next downward crossing of said mean line over one roughness profile periodic intersection of said mean line, and wherein $S_m$ is calculated as an average distance of spacings between roughness profile periodic intersections.

EP 1 770 719 A2

**Description**

FIELD OF THE INVENTION

The present invention relates to top-coat layers as protective layers for radiographic image storage panels, which panels are more particularly suitable for use in mammography, especially with respect to image quality in general, and screen structure noise in particular.

BACKGROUND OF THE INVENTION

The replacement of X-ray screen/film systems by computer radiography (CR) started about 10 to 15 years ago. Until recently, that conversion was limited to general radiography. Now, the CR companies are introducing mammo CR as well.

More in particular for clinical diagnosis and routine screening of asymptomatic female population, screen-film mammography today still represents the state-of-the-art for early detection of breast cancer. However, screen-film mammography has limitations which reduce its effectiveness. Because of the extremely low differentiation in radiation absorption densities in the breast tissue, image contrast is inherently low. Film noise and scatter radiation further reduce contrast making detection of microcalcifications difficult in the displayed image. So e.g. film gradient must be balanced against the need for wider latitude. Although significant improvements of clinical image quality in order to eliminate the need for repeated exposures due to poor film image quality caused by factors as radiation scatter noise, fog, blurring, mottle and artifacts have meanwhile been realized in that digital radiographic techniques enable medicins to perform quantitative radiography through image digitization and allows them, by useful enhancement techniques, such as edge enhancement of microcalcifications and transmission of mammograms to remote sites over computer networks; advantageously reducing the absorbed radiation dose received by a patient by at least a factor of seven as compared to screen-film mammography, further facilitating mammography for routine screening of asymptomatic population in the 35 years and older age group by significantly enhancing the benefit to risk ratio, furthermore significantly reducing the absorbed dose to the patients during a needle localization biopsy procedure which can require as many as 10 exposures.

Dedicated storage phosphor screens are required for mammographic applications, more particularly as a higher sharpness is needed. Moreover since the number of X-ray quanta contributing to the image is higher than in general radiography, quantum noise is reduced and screen-structure noise has a significant contribution. Hence, screens must be developed with a higher homogeneity, i.e. the pixel-to-pixel sensitivity fluctuation should be reduced as much as possible.

As is well-known in different X-ray imaging applications, different X-ray spectra and different X-ray doses are used. Mammographic imaging differs in particular from the other imaging applications, which are considered under the common name "general radiography".

This difference in spectrum and dose has as a consequence that specific phosphor screens should be used for mammography, different from the general radiography screens. Another consequence is that in mammography other factors are responsible for image quality than in general radiography.

Typical X-ray exposure conditions in general radiography are the so-called RQA-5 conditions [IEC(6)1267: 1994]. The spectrum is generated by a tungsten anode at a 70 kVp setting. The spectrum is filtered by aluminum filters having a thickness of 2.5 mm for the internal Al filter and 21 mm for the external Al filter.

RQA-5 exposure conditions correspond to an Al half-value thickness of 7.1 mm. The average energy of the X-ray quanta is ca. 55 keV. For a typical general radiography dose of 0.3 mR the number of X-ray quanta to which the phosphor screen is exposed under RQA-5 conditions is: $8.6 \cdot 10^4$ quanta/mm$^2$. The number of quanta absorbed by the phosphor screen is typically ca. $2.5 \times 10^4$ quanta/mm$^2$.

A typical mammo spectrum is generated by an X-ray source having a Mo anode at a 28 kVp setting. In a standard procedure use is made therefor from ISO 9326-3 (beam quality I: Mo/Mo 28kV 2.1 mm A1 external filter; H(alf) V(alue)L(ayer) = 0.63 mm Al).

For a typical mammography dose of 10 mR the number of X-ray quanta to which the phosphor screen is exposed under the above described mammo conditions is: $4.7 \cdot 10^5$ quanta/mm$^2$ and the number of absorbed quanta is of the order of $3 \times 10^5$ to $4 \times 10^5$.

Hence, the number of quanta that is used to make an image is more than 10 times higher in mammography than in general radiography. As a consequence, quantum noise, due to fluctuations in the number of X-ray quanta absorbed per pixel is relatively large in general radiography and less important in mammography. In CR general radiography quantum noise is the only important noise source, which means that signal-to-noise ratio is primarily determined by the X-ray absorption and the sensitivity of the phosphor screen. Since quantum noise is smaller in mammography another noise source, screen-structure noise, has a significant contribution to the total noise in the image as well.

Therefore, contrary to what is the case in general radiography, screen-structure must be reduced to a minimum in order to have a good phosphor screen for mammographic imaging. I.e. the phosphor screen must be made as homogeneous as possible.

Pixel to pixel sensitivity variations in the phosphor screen are the origin of screen-structure noise. Sensitivity fluctuations may be caused by fluctuations in phosphor layer thickness. For a powder phosphor screen, applied by e.g. doctor-blade coating, the phosphor layer thickness varies over a large distance. Therefore, thickness fluctuations give rise to long distance density variations in the X-ray image and not to noise in the visible range. For a needle phosphor screen, made by physical vapour deposition, the amount of phosphor deposited on the substrate may fluctuate as well, but also here the fluctuation in the amount of deposited material fluctuates over a large distance. Therefore, also in the case of needle phosphor screens coating weight variations are not the primary cause of the high-frequency sensitivity variations, which give rise to screen-structure noise.

In powder phosphor screens, variations in packing density in the phosphor layer give rise to sensitivity variations and, therefore, to screen-structure noise. The needle phosphor screen physical vapour deposition process, is assumed to lead to a more homogeneous phosphor coating weight on a small scale. Therefore, the needle phosphor layer is assumed to lead to less screen-structure noise than a powder phosphor layer.

Other sources of screen-structure noise exist, however.
In CR the phosphor layer is stimulated by a beam of red or infrared laser light. The stimulating light beam is partly reflected and partly transmitted at the surface of the phosphor screen, i.e., at the surface of the top-coat covering the phosphor layer. Also, the stimulation light is scattered at the surface and sometimes inside the top-coat layer. The reflection, transmission and scattering properties of the top-coat may differ from pixel to pixel. As a consequence, the stimulation efficiency of the phosphor layer may vary and, therefore, the signal generated. For that reason, the surface properties of the top-coat have an influence on the amount of screen-structure noise generated by the phosphor screen.

One way to have very constant optical characteristics of the phosphor screen surface is to apply a very smooth top-coat that is very homogeneous in thickness. A disadvantage of this approach is, however, that at point defects or in scratches, the surface properties will be very different from the surface properties in the rest of the screen. As a consequence, the point defects and scratches on the screen surface will be stand out and will be visible in an X-ray image.

Apart from image quality properties, noise measurements have been performed e.g. in "Nuclear Instruments and Methods in Physics Research Section A: Accelerators, Spectrometers, Detectors and Associated Equipment", Vol. 430, issues 2-3, July 1999, p. 559-569. Therein, by bringing the phosphor screens in close contact with a film (AGFA Scopix LT2B) sensitive to their emission spectrum (red). The above configuration was irradiated with a mammography X-ray unit (molybdenum target tube and 30 kVp X-ray spectrum filtered by a 51 mm plexiglass). The exposure was 6.32 mR. This value is among the lowest values reported for NPS measurements in 30 kVp as taught in Med. Phys. 12 (1985), p. 32; Med. Phys. 19 (1992), p. 449 and Radiology 145 (1982), p. 815. Furthermore it has been said therein that as a preferred technique the sedimentation technique, used for screen preparation, results in uniform distribution of phosphor grains. Contribution of the screen structure noise to NPS for the above mentioned exposure value can thus be considered small as compared to the quantum noise pattern. Structure noise properties of granular phosphors used in X-ray imaging detectors have further been studied in terms of a noise transfer function, NTF as disclosed in "Nuclear Instruments and Methods in Physics Research Section A: Accelerators, Spectrometers, Detectors and Associated Equipment" Vol. 490, issue 3 (2002), p. 614-629. That study has been performed in high-exposure conditions where the contribution of structure noise to total screen noise is considerable. An analytical model, based on the cascaded linear systems methodology presented in literature, has been developed, taking into account quantum noise and structure noise. Furthermore, it considers the effect of the K X-rays re-absorption on the phosphor material and the effect of screen thickness on the NTF. The model was validated against experimental results obtained by a set of $Zn_2SiO_4$:Mn phosphor screens prepared by sedimentation. The model may be used to evaluate the effect of screen thickness and the effect of the characteristic X-rays on NTF in high-exposure conditions where structure noise is considerable. The effect of screen thickness is particularly important in high-exposure conditions, where the screen structure noise is dominant. Screen structure noise is attributed to fluctuations of the absorbed X-ray quanta due to the inhomogeneities in the phosphor coating as has been described by Barnes in Med. Phys. 9(1982), p. 656. This component is negligible in quantum-limited (i.e. low-exposure) conditions, but in higher exposure conditions it should be considered. Screen noise is evaluated in terms of either NPS (also called Wiener spectrum), or Noise Transfer Function, NTF Med. Phys. 17 (1990), p. 894. Since quantum and structure noise are statistically independent and uncorrelated, total screen NPS equals the sum of the corresponding NPS of quantum noise and screen-structure noise.

Apart for the requirement to get dedicated storage phosphor screens available for mammographic applications, it is clear that a higher sharpness is of utmost importance.

Otherwise since the number of X-ray quanta contributing to the image is higher than in general radiography, quantum noise is reduced and screen-structure noise has a significant contribution.

Hence, screens must be developed with a higher homogeneity, i.e. the pixel-to-pixel sensitivity fluctuation should be reduced as much as possible, particularly from a point of view of layer arrangement and screen structure, and even more particularly from a point of view of screen surface structure.

OBJECTS AND SUMMARY OF THE INVENTION

Accordingly, it is an object of the present invention to offer mammographic screens with top-coats that lead to low screen-structure noise, while not being particularly sensitive to point defects or scratches.

It is a further object of the present invention to provide a top-coat for a photostimulable storage phosphor screen, capable of producing high-quality images having a low screen-structure noise, more particularly suitable for use in mammographic applications.

More particularly, it is an object of the present invention to provide a suitable top-coat for a stimulable needle-shaped phosphor capable of providing high-quality images exhibiting a very low screen structure noise, when utilized in a radiographic image conversion panel.

The above-mentioned advantageous effects have been realized by providing a storage phosphor panel having the specific features set out in claim 1. Specific features for preferred embodiments of the invention are set out in the dependent claims.

Further advantages and embodiments of the present invention will become apparent from the following description and drawings.

BRIEF DESCRIPTION OF THE DRAWINGS

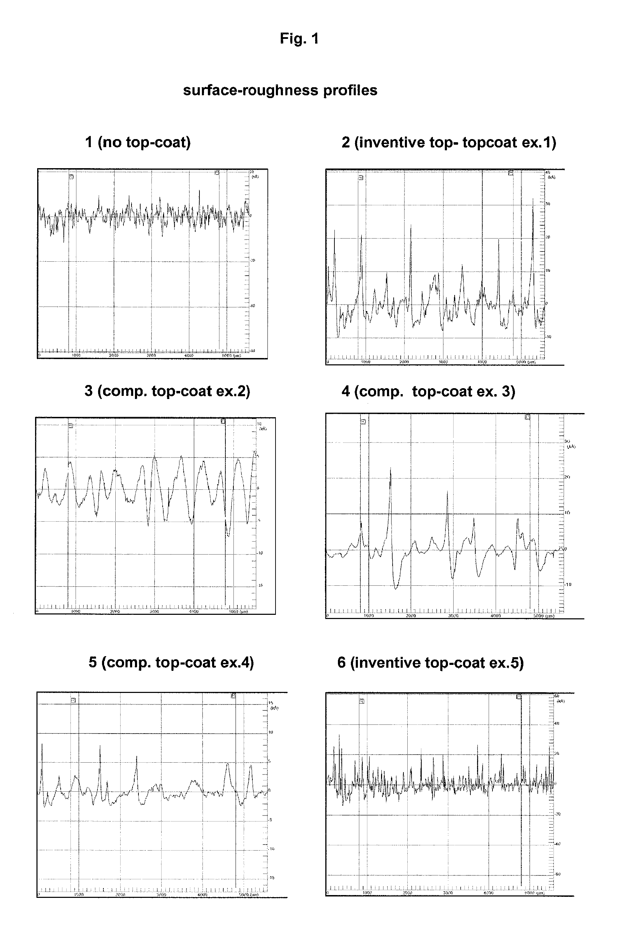

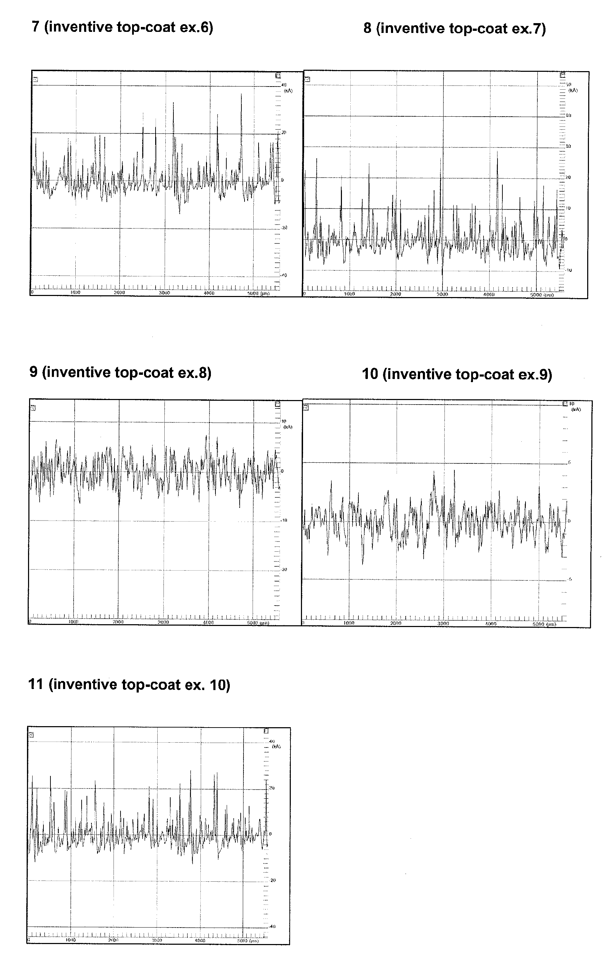

Fig. 1 provides surface-roughness profiles for top-coats have been applied onto screens having the same powder phosphor coating. The 10 screens or panels (nos. 2-11) have the following top-coats (besides screen 1, having no top-coat):

      1: absence of a top-coat (only support + powder phosphor layer)
      2: screen-printed topcoat, with pigment in the topcoat layer;
      3: screen-printed topcoat, without pigment in the topcoat;
      4: spray-coated topcoat, with anti-foam agent;
      5: same as in 4, but without anti-foam agent;
      6: cellulose acetobutyrate (CAB) top-coat;
      7: = 6 with 10 wt% (solid content) of acrylate added vs. CAB;
      8: = 6, with 40 wt% (solid content) of acrylate added vs. CAB;
      9: styrene-acrylonitrile top-coat (15 wt% solid content);
      10: styrene-acrylonitrile top-coat (20 wt% solid content);
      11: = 10, with an anti-friction agent added.

Fig. 2 shows a plot of $DQE_{rel}$ at 2 lp/mm, called $DQE2_{rel}$, as a function of the mean or average spacing between roughness profile periodic intersections, $S_m$: a lower value of $DQE2_{rel}$ corresponds to more screen-structure noise, whereas a higher value of $DQE2_{rel}$ corresponds to less (or a lower) screen-structure noise.

Fig. 3 shows relations between $DQE2_{rel}$ and roughness amplitude $R_z$.

OBJECTS AND SUMMARY OF THE INVENTION

The above-mentioned advantageous effects are realized by providing a particularly suitable top-coat layer onto a photostimulable screen or panel having the specific features set out in claim 1.

Specific features for preferred embodiments of the invention are set out in the dependent claims.

Further advantages and embodiments of the present invention will become apparent from the following description and drawings.

DEFINITIONS

If the phosphor screen top-coat is not substantially smooth, it has a roughness with a certain amplitude and a certain spatial frequency as can be made visible with a perthometer.

$R_z$ is a measure of the roughness amplitude. The single roughness depth, $Z_l$ is the vertical distance from the highest to the deepest profile point. $R_z$ is the mean or average roughness depth and is the mean value of the single roughness depths $Z_l$ of consecutive sampling lenghts.

$S_m$ is the mean or average spacing between peaks and is a measure of the spatial frequency of the top-coat roughness. The "spacing between peaks" is defined by the downward crossing of the mean line, followed by an upward crossing up to the next downward crossing of said mean line, i.e. over one roughness profile period intersection of said mean line, crossed due to peaks and valleys in the roughness profile of said top-coat. $S_m$ is calculated as the average of individual spacings between peaks , i.e. between roughness profile periodic intersections. The lower that value, the higher the spatial frequency of the roughness profile as registered by means of a perthometer over and along its scan-distance (in the direction of the x-axis), while intersecting the said mean line.

Details about methods of measuring those data will be given in Examples hereinafter.

It has otherwise been found that the roughness amplitude of the top-coat, $R_z$, does not have a significant influence upon the amount of screen-structure noise. The roughness frequency, however, is closely connected to the amount of screen-structure noise.

Screen structure noise is quantified by its $DQE2_{rel}$ value. $DQE2_{rel}$ expresses the amount of screen-structure noise at 2 lp/mm but it is representative for the amount of screen-structure noise in the complete spatial frequency range. Image quality in conditions related with mammographic imaging was measured for the screens incorporating the example fine particle size mammo phosphor samples and having the different top-coats defined above.

A Siemens Mammomat Nova 1000 with Mo internal filtering was used for exposures of the screens to be investigated. An external filtering with an aluminum filter having a thickness of 2.1 mm was added (HVL = 0.63 mm Al). Distance to the source detector was 1 m.

For image read-out use was made of an Agfa CR75 scanner with a 50 $\mu$m pixel size and speed class setting SC100.

The technical image quality was determined by measuring the modulation transfer function, MTF, and the noise power spectrum, NPS, or Wiener spectrum, in close approximation to the methods described in the IEC-62220-1 standard from the International Electrotechnical Commision. From the MTF and the Wiener spectrum, the DQE was calculated by making use of the following equation:

$$DQE(\nu) = S_O{}^2 \times MTF(\nu) \; / \; NPS(\nu) \; / \; Q_O$$

wherein So is the average signal in the flat-field image, MTF is the modulation transfer function, NPS is the noise power or Wiener spectrum and $Q_o$ is the X-ray dose in number of quanta per mm$^2$ used to make the flat-field image.

For MTF measurement a 127 $\mu$m tungsten edge was imaged. The edge spread function was obtained from a slanted edge image and was used to calculate the MTF by making use of the algorithms described in the IEC62220-1 standard. Reading of the article " Accuracy of a simple method for deriving the presampled modulation tranfer function of a digital radiographic system from an edge image", Med. Phys. 30(9), 2323-2331, 2003; is recommended as a reference closely related with that subject.

For Wiener spectrum measurement, flat-field images were made. Next, the Wiener spectrum was calculated in close approximation to the methods described in the IEC 62220 standard. The difference with the standard procedure was such that 1 million independent pixels were used for noise power spectrum, NPS, calculation instead of 4 millions and that the block size was 128 x 128 pixels instead of 256 x 256 pixels for NPS calculation.

For each screen, the DQE was measured at two different doses: about 3 mR and about 22 mR. Next the relative DQE at 2 lp/mm, $DQE2_{rel}$, was obtained from following calculation:

$$DQE2_{rel} = DQE(2 \; lp/mm) \; at \; 22 \; mR \; / \; DQE(2 \; lp/mm) \; at \; 3 \; mR.$$

Since the DQE drops with increasing dose because of the presence of screen-structure noise, $DQE2_{rel}$ is an excellent measure of the amount of screen-structure noise in the flat-field image. The higher the amount of screen-structure noise, the lower $DQE2_{rel}$. A higher value of $DQE2_{rel}$ should thus be the goal.

DETAILED DESCRIPTION OF THE INVENTION

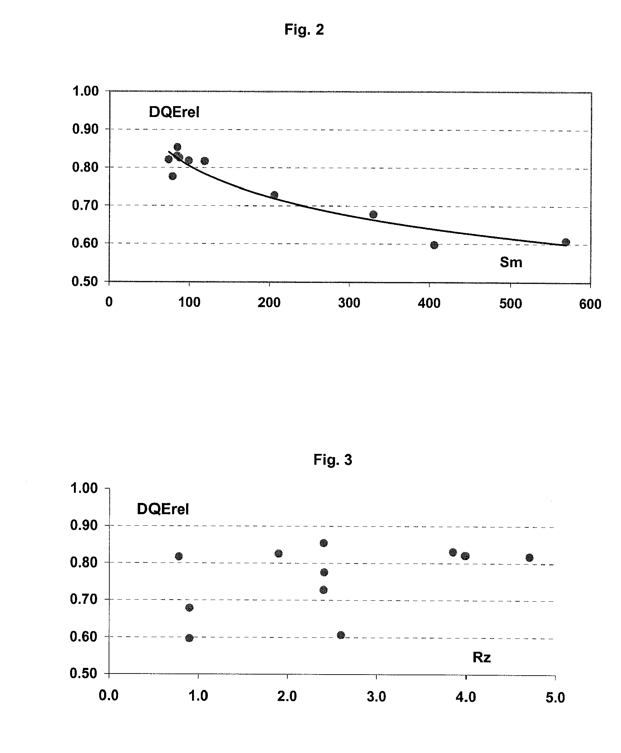

In Figure 2 $DQE_{rel}$ at 2 lp/mm has thus been plotted as a function of the mean or average spacing between roughness profile periodic intersections, $S_m$. A higher value of $DQE_{rel}$ corresponds to less screen-structure noise; a lower value of $DQE_{rel}$ corresponds to more screen-structure noise. It is clear from the figure that a high roughness spatial frequency, corresponding with a small mean spacing between peaks (i.e. roughness profile as registered while passing a perthometer over its surface in its scan-direction, said spacings being measured between points - over one period each - where said profile intersects a mean or zero reference line averaging peak and valley roughness amplitudes, i.e.

between roughness profile periodic intersections) leads to a small or low amount of screen-structure noise, whereas a low roughness spatial frequency, corresponding to a large mean or average spacing between roughness profile periodic intersections leads to a large or high amount of screen-structure noise.

It has been found that the amount of screen-structure noise is acceptable when $S_m$ (average spacing between roughness profile periodic intersections as measured by means of a perthometer over and along its scan-distance in the direction of the x-axis) is smaller than 150 $\mu$m, and even more preferably when $S_m$ is smaller than 100 $\mu$m.

The reason why screen-structure noise is low for a high spatial frequency phosphor screen roughness is probably that the screen surface property variation is more or less averaged out within a pixel; a pixel corresponding with the size of the laser beam, expanded in the phosphor layer. For mammography this expanded laser beam size is believed to be of the order of 150 $\mu$m to 250 $\mu$m.

If the screen surface has a low spatial frequency roughness, the screen surface property variation is not averaged out within a pixel. Therefore, there is a larger variation in stimulation light reflection, transmission and scattering from pixel to pixel in the phosphor screen. This leads to a signal variation and, therefore, to increased screen-structure noise.

Accordingly it has thus been found now that, in order not to lose image quality to a significant degree, the screen top-coat must be thin and have a negligible contribution to screen-structure noise. Opposite thereto screen-printed top-coats, with or without pigment, have been shown to be too thick and to lead to a too large MTF loss. Moreover a contribution, to a smaller or larger extent, to screen-structure noise was found, depending on the roughness profile of the top-coat.

Since needle phosphor screens, made by physical vapour deposition onto supports, lead to a more homogeneous phosphor coating weight on a small scale, needle phosphor layers as such lead to a very low amount of screen-structure noise (SSN). Therefore, for such screens, also called needle image plates or NIPs, it is even more important to have good top-coats that do not contribute to screen-structure noise, in order not to spoil the excellent quality of the phosphor layer.

It has unexpectedly been found now that, e.g., a particular top-coat as a cellulose acetobutyrate coating, applied by doctor blade coating, apart from offering an opportunity to be coated as a thin layer, does not significantly increase screen-structure noise. Hence, the quality of the finished powder or needle phosphor screen with a cellulose acetobutyrate top-coat is high, as envisaged. It has moreover been found that the spatial frequency distribution of the top-coat roughness is important: in order to have a negligible contribution to screen-structure noise, roughness spatial frequencies should be high, i.e., roughness spatial frequencies higher than 5 lp/mm seem to have a beneficial effect on screen-structure noise.

According to the present invention a photostimulable storage phosphor screen or panel comprises on a support, a storage phosphor layer and an outermost top-coat layer, wherein said top-coat layer has a roughness profile such that a mean or average spacing between roughness profile periodic intersections as measured by means of a perthometer, is less than 150 $\mu$m.

In a more preferred embodiment according to the present invention said mean spacing between roughness profile periodic intersections is less than 100 $\mu$m.

Further according to the present invention in a photostimulable storage phosphor screen or panel said outermost top-coat layer has a thickness of less than 10 $\mu$m.

In a more preferred embodiment according to the present invention said outermost top-coat layer has a thickness in the range from 1 $\mu$m to 7 $\mu$m.

In another more preferred embodiment according to the present invention said outermost top-coat layer has a thickness in the range from 2 $\mu$m to 5 $\mu$m.

In a most preferable embodiment according to the present invention said top-coat layer is a cellulose acetobutyrate layer (in that it comprises cellulose acetobutyrate as a main component), applied by doctor blade coating from a solution. In favor of lowering scratch sensitivity of such a cellulose acetobutyrate top-coat layer, according to the present invention said top-coat layer further comprises one or more acrylate type polymers.

Alternatively according to the present invention said top-coat layer is a polystyrene acrylonitrile layer (in that it comprises polystyrene acrylonitrile as a main component) and still another suitable alternative is offered when said top-coat layer is a poly methyl methacrylate (PMMA) layer (in that it comprises PMMA as a main component), also applied by doctor blade coating from a solution.

Moreover in order to obtain a top-coat layer with the desired characteristics, a filler is introduced into the top-coat of the screens according to the present invention. Said filler, characterized by not being soluble in the solvent used to prepare the top-coat lacquer for doctor blade coating, preferably is a pigment. As a pigment a white pigment is preferred. In a particular embodiment said filler is a phosphor, as e.g. a BaFBr:Eu phosphor.

According to the present invention said top-coat layer is a doctor-blade coated layer.

In one embodiment according to the present invention, said storage phosphor layer is a binderless layer and in a preferred embodiment thereof the phosphor in the said binderless layer is a CsBr:Eu phosphor. Such a CsBr:Eu phosphor in a binderless layer is a needle-shaped phosphor as mentioned hereinbefore.

In another embodiment according to the present invention, said storage phosphor layer is a powder phosphor layer and in a preferred embodiment thereof the phosphor in the said powder phosphor layer is a lanthanide doped alkaline earth fluorohalide type phosphor, and, more in particular, a europium doped barium fluorohalide type phosphor according to the formula $Ba_{1-x}M^{II}_xFX:Eu$, wherein $0 < x < 1$ and wherein X is one of bromide or iodide or a mixture thereof and wherein $M^{II}$ is an alkaline earth metal. More particularly $M^{II}$ is one of Ca, Sr and Ba or a combination thereof.

In a particular embodiment a screen according to the present invention has a layer arrangement wherein an outermost top-coat layer is deposited onto a para-xylylene or parylene layer as a first top-coat layer, wherein said parylene layer is adjacent to said phosphor layer. This layer arrangement is more particularly preferred when specific protection against humidity of the environment is envisaged.

In a method of preparing a screen according to the present invention, said powder phosphor layer is, in a particular embodiment thereof, applied by doctor blade coating.

In another embodiment, in a method of preparing a screen according to the present invention, said binderless phosphor layer is, in a particular embodiment thereof, applied by vapor deposition.

With respect to the method of applying an outermost top-coat layer to a screen as envisaged, in order to attain the objects according to the present invention, said outermost layer is, in a particular embodiment thereof, applied by doctor blade coating.

Examples

While the present invention will hereinafter be described in connection with preferred embodiments thereof, it will be understood that it is not intended to limit the invention to those embodiments.

It has been investigated whether there exists an influence of the kind of top-coat system on the amount of screen-structure noise (SSN) in images made with the phosphor screens with top-coat. The influence of the top-coat roughness and of the top-coat roughness profile on screen-structure noise has thus been evaluated.

Therefore, the roughness amplitude of the surface of each top-coat system was measured by means of a perthometer and expressed by the $R_z$ value. $R_z$ was defined herein as the average value of the differences between the highest and lowest point in 5 parts of the surface roughness profile and was calculated from the data as measured. Samples were scanned with a Dektak-8 Stylus Profiler. For these measurements line-scans were performed with a 2.5 $\mu$m needle having a top edge of 60°.

Roughness-scan parameter settings were following:
sampe-time: 28 s; scan-distance: 5600 $\mu$m; horizontal resolution: 0.667 $\mu$m/sample; dynamic range: 655 Å; vertical resolution: 1 nm; needle load: 5 mg.
A Short Pass Filter cutoff of 800 $\mu$m was the processed option. Each of the samples was multi-scanned (10 times), followed by calculation of average surface roughness values $R_z$.

Therein the respective figures 1 to 11 stand for:

    1: absence of a top-coat (only support + powder phosphor layer)
    2: screen-printed topcoat, with pigment in the topcoat layer;
    3: screen-printed topcoat, without pigment in the topcoat layer;
    4: spray-coated topcoat, with anti-foam agent;
    5: same as in 4, but without anti-foam agent;
    6: cellulose acetobutyrate (CAB) top-coat;
    7: = 6 with 10 wt% (solid content) of acrylate added vs. CAB;
    8: = 6, with 40 wt% (solid content) of acrylate added vs. CAB;
    9: styrene-acrylonitrile top-coat (15 wt% solid content);
    10: styrene-acrylonitrile top-coat (20 wt% solid content);
    11: = 10, with an anti-friction agent added.

Detailed compositions of phosphor layer and protective topcoat layers are given hereinafter.

Preparation of phosphor screen used for the evaluation of the different top-coats

In order to test the contribution of the top-coat to screen-structure noise, several top-coats were applied onto a phosphor layer leading itself to a small amount of screen-structure noise. For that purpose, a batch of the photostimulable phosphor was prepared in the following way.

$Ba_{0.859}Sr_{0.14}Eu_{0.01}F_2$ was prepared by adiabatic reaction with HF of appropriate amounts of $BaCO_3$, $SrCO_3$ and $Eu_2O_3$ in an aqueous dispersion.

A raw mix was made by thoroughly mixing the following ingredients in the following proportions:

| | |
|---|---|
| $Ba_{0.859}Sr_{0.14}Eu_{0.01}F_2$: | 0.528 mole |
| $BaBr_2$: | 0.375 mole |
| $BaI_2$: | 0.095 mole |
| $NH_4Br$: | 0.045 mole |
| $CsI$: | 0.003 mole |
| $PbF_2$: | 0.0003 mole |
| $Sm_2O_3$: | 0.00025 mole |
| $Eu_2O_3$: | 0.00072 mole |

The phosphor was made in 3 firing steps:

First firing step:

Three crucibles, each containing 165 g of raw mix were placed in a quartz tube, which was sealed with a flange having a gas inlet and a gas outlet with water lock. After flushing with $N_2$ for 15 minutes, the quartz tube was placed in a box furnace at 850°C. Dwell time in the furnace was 2 hours and the tube was flushed with $N_2$ at 1.5 l/min.
After the firing the tube was taken out of the furnace and left to cool for 30 minutes while being flushed with $N_2$. Next, the crucibles were taken out of the tube and the powder was deagglomerated with mortar and pestle.
The deagglomerated powder was milled on an Alpine AFG-100 air mill equipped with three 3 mm nozzles, and at a milling chamber pressure of 3 bar and a wheel rotation rate of 3,500 r.p.m..

Second firing step:

Three crucibles containing 230 g of first fired material each, were placed in a quartz tube, which was sealed with a flange having a gas inlet and a gas outlet with water lock. The quartz tube was immediately placed in a box furnace at 725°C. Dwell time in the furnace was 5.5 hours and the tube was flushed with $N_2$ at 1.5 l/min. After that firing the tube was allowed to cool in the furnace to 450°C while being flushed with $N_2$. Next, the tube was opened, taken out of the furnace and allowed to cool further for 30 minutes. The crucibles were taken out of the tube and the powder was deagglomerated with mortar and pestle. The deagglomerated powder was milled again on an Alpine AFG-100 air mill equipped with three 3 mm nozzles and at a milling chamber pressure of 3 bar and a wheel rotation rate of 3,500 r.p.m..
The phosphor was remilled (3rd milling) in the Alpine AFG-100 air jet mill at 9,500 r.p.m., refired in the same way as in the second firing and remilling (4-th milling) in the Alpine AFG-100 air jet mill at 10.500 rpm.
The phosphor prepared in the above described way was used as starting material in order to prepare the fine phosphor for coating a homogeneous phosphor screen leading to a small amount of screen-structure noise.

Phosphor layer coating:

The final fine particle size phosphor was seperately dispersed in a binder solution (see relative phosphor layer composition as indicated hereinafter).

Phosphor layer composition:

| | |
|---|---|
| STANN JF95B (from SANKYO ORGANIC Chemicals Co. Ltd.) | 0.29% |
| KRATON FG19101X (from Shell Chemicals) : | 3.99% |
| BaSrFBr:Eu : | 95.72% |

Preparation of the phosphor lacquer composition:

STANN JF95B and KRATON FG19101X were dissolved while stirring a solvent mixture of methylcyclohexane, toluene and butyl acetate in ratios by volume of 50:35:15. The phosphor was added thereafter and stirring was further proceeded for another 10 minutes at a rate of 1700 r.p.m.. Then the phosphor lacquer was given a ball-mill treatment during 1 minute at 1700 r.p.m.. The composition was doctor blade coated onto a subbed 175 $\mu$m thick polyethylene

terephthalate support and dried.

All top-coats investigated were applied on this same phosphor layer for the assessment of their impact on screen-structure noise.

Composition of the protective layers

Screen-printed top-coat layers

| | Reference Ex.1 | No pigment Ex.2 | Manufactured |
|---|---|---|---|
| Ingredient | | | by |
| Hexanedioldiacrylaat (HDDA) | 37.2 | 46.6 | UCB |
| Ebecryl 1290 (hexafunctional alifatic urethane acrylate) | 27.0 | 33.9 | UCB |
| Neocryl B-725 (p(BMA-MMA)) | 13.5 | 17.0 | Zeneca |
| Modaflow | 2.0 | 2.5 | Monsanto |
| BaFBr:Eu | 20.3 | - | AGFA |

The screens were overcoated by means of screen printing with a BaFBr:Eu pigmented (Ex.1) and non-BaFBr:Eu-pigmented (Ex.2) protective layer. Curing of this layer was established by EB-curing at 8 Mrad using 158 kV-radiation.

Spray-coated top-coat layers

| | Ex.3 | Ex.4 | Manufactured by |
|---|---|---|---|
| Ingredient | wt % | wt % | |
| Neocryl B-725 | 1.1 | 1.1 | Polyvinyl Chemie |
| hexaandioldiacrylate | 4.9 | 4.9 | UCB |
| TMPTA | 2.6 | 2.6 | UCB |
| Ebecryl 1290 | 9.6 | 9.6 | UCB |
| Fluorad FC-4430 | 1.0 | 1.0 | 3M |
| Rhodafac RM-710 | 1.0 | 1.0 | Rhodia |
| Octafluoropentylacrylate | 2.1 | 2.1 | Appollo |
| Metaline 590 base | 5.1 | 5.1 | Schramm |
| methylisobutylketon | 41.9 | 42 | Merck |
| methoxypropylactetate | 14 | 14 | Aldrich |
| isobutylacetate | 14 | 14 | Acros |
| Dow Corning Antifoam MSA | 0.3 | x | Dow |
| Darocur 1173 | 1.3 | 1.3 | Ciba-Geigy |
| benzophenon | 1.1 | 1.1 | Merck |

The screens, sealed with a parylene (p-xylylene) layer (by a CVD-process), in order to prevent the phosphor layer from penetration of the top-coat, were covered with the lacquer by means of a solvent based $N_2$ assisted spray coating technique. The top-coat was hardened by UV-initiated cross-linking using a line UV source.

Cellulose acetobutyrate top-layer

| | Ex.5 | Manufactured by |
|---|---|---|
| Ingredient | wt % | |
| CAB 381-2 | 9.95 | Krahn Chemie |
| Lanco-WAX 1780 | 0.5 | Langer |
| Methoxypropanol/aceton/ isopropanol 8/20/72 | 89.55 | Aldrich/Merck/Merck |

The composition was doctor blade coated with a thickness of 60 $\mu$m at a coating rate of 2.5 m per minute on the phosphor layer and dried during 30 min. at 45°C and 30 min. at 90°C.

Cellulose acetobutyrate top-layer (and further alternative coatings)

| Coating no. | 7 | 8 | 9 | 10 | 11 | |
|---|---|---|---|---|---|---|
| | Ex.6 | Ex.7 | Ex.8 | Ex.9 | Ex.10 | Manufactured |
| Ingredient | wt % | wt % | wt % | wt % | wt % | by |
| CAB 381-2 | 9.05 | 7.12 | - | - | - | Krahn Chemie |
| Ebecryl 1290 | 0.91 | 2.85 | - | - | - | UCB |
| Poly(STY-c-ACN) | - | - | 15 | 20 | 19.80 | Degussa |
| Lanco-WAX 1780 | 0.45 | 0.36 | - | - | 0.99 | Langer |
| Methylethylketon | - | - | 85 | 80 | 79.21 | Merck |
| Tolueen/Methoxypropanol/ aceton/ isopropanol 30/5.6/14/50.4 | 89.59 | 89.68 | - | - | - | Merck/Aldrich Merck/Merck |

The composition was doctor blade coated with a thickness of 80 $\mu$m at a coating rate of 2.5 m per minute on the phosphor layer and dried during 30 min. at 45°C and 30 min. at 60°C.

Surface roughness profiles of the different top-coats in screens nos. 2-11 (= ex. 1-10) described hereinbefore are shown in Fig.1, besides a screen without top-coat(coating no.1). Surface roughness profiles were determined as described hereinbefore. Those profiles are illustrative for the frequency of the surface roughness variations (see frequency of variation of the profile over the x-axis, representing measurements made on $\mu$m-scale when linearly passing over the scanned surface) and for the amplitude $R_z$ with which levels change around relative reference level 0.

Table 1

| No. | Top-coat | $S_m$ | $R_z$ | $DQE2_{rel}$ |
|---|---|---|---|---|
| 1 | No top-coat | 84 | 2.4 | 0.85 |
| 2 | Comp.Ex.1: screen-printed + pigment | 206 | 2.4 | 0.73 |
| 3 | Comp.Ex.2: screen-printed; no pigment | 406 | 0.9 | 0.60 |
| 4 | Comp.Ex.3: spray-coated + anti-foam agent | 569 | 2.6 | 0.61 |
| 5 | Comp.Ex.4: spray-coated without anti-foam agent | 330 | 0.9 | 0.68 |
| 6 | Inv.Ex.5: cellulose acetobutyrate | 99 | 4.7 | 0.82 |
| 7 | Inv.Ex.6: cellulose acetobutyrate + 10 wt% of acrylate vs. CAB | 78 | 2.4 | 0.78 |
| 8 | Inv.Ex.5: cellulose acetobutyrate + 40 wt% of acrylate vs.CAB | 84 | 3.9 | 0.83 |

(continued)

| No. | Top-coat | $S_m$ | $R_z$ | DQE2$_{rel}$ |
|---|---|---|---|---|
| 9 | Inv.Ex.8: 15 wt% poly-styrene-acrylonitrile [Poly(ST-c-ACN)] | 87 | 1.9 | 0.83 |
| 10 | Inv.Ex.9: 20 wt% Poly(ST-c-ACN) | 119 | 0.8 | 0.82 |
| 11 | Inv.Ex.10: 20 wt% Poly(ST-c-ACN) + anti-friction agent (Lanco-WAX) | 73 | 4.0 | 0.82 |

In Table 1 figures were brought together for the screens nos. 1-11 (with top-coats from ex. 1-10, inclusive for screen no.1 without top-coat) as calculated after measuring spacings between roughness profile periodic intersections and calculating the average value $S_m$ thereof and calculating DQE2$_{rel}$ following the procedure given hereinbefore. It was found unexpectedly from those profiles that there appears not to be a correlation between $R_z$ values and screen-structure noise: the screen no.6 (cellulose acetobutyrate - CAB - inventive example 5) top-coat has one of the lowest amounts of screen structure noise SSN, although it has the highest roughness amplitude $R_z$. On the other hand the frequency of the surface roughness appears to have the most important impact on screen-structure noise. If the spatial frequency of the roughness is low, there is a large contribution of the top-coat to the SSN. It is concluded that the cellulose acetobutyrate top-coat layer as shown in inventive Ex.5 (screen no.6) is clearly forming the best top-coat with respect to the object of lowering screen structure noise as envisaged.

In Fig. 2 a plot of DQE2$_{rel}$, as a function of the mean or average spacing between roughness profile periodic intersections, $S_m$, has been given. For a roughness profile of the top-coat layer such that a mean spacing between roughness profile periodic intersections as registered by means of a perthometer is less than 150 $\mu$m, a screen satisfying the requirements as set forth in the objects of the present invention has fully been attained.

Fig. 3 shows that no particular relations can be found between screen structure noise parameter DQE2$_{rel}$ and roughness amplitude parameter $R_z$ as has already been taught hereinbefore.

The present invention indicates that the spatial frequency distribution of the top-coat roughness is important indeed, in that in order to have a negligable contribution to screen-structure noise, roughness spatial frequencies should be high ($S_m$ values low).

**Claims**

1. A photostimulable storage phosphor screen or panel comprising on a support, a storage phosphor layer and an outermost top-coat layer, **characterised in that** said outermost top-coat layer has a roughness profile such that a mean or average spacing $S_m$ between peaks as measured by means of a perthometer following profile peaks and valleys of said top-coat, is less than 150 $\mu$m, said spacing being defined by downward crossing of a mean line, followed by upward crossing up to next downward crossing of said mean line over one roughness profile periodic intersection of said mean line, and wherein $S_m$ is calculated as an average distance of spacings between roughness profile periodic intersections.

2. Screen according to claim 1, wherein said mean spacing between roughness profile periodic intersections is less than 100 $\mu$m.

3. Screen according to claim 1 or 2, wherein said outermost top-coat layer has a thickness of less than 10 $\mu$m.

4. Screen according to claim 1 or 2, wherein said outermost top-coat layer has a thickness in the range from 1 $\mu$m to 7 $\mu$m.

5. Screen according to claim 1 or 2, wherein said outermost top-coat layer has a thickness in the range from 2 $\mu$m to 5 $\mu$m.

6. Screen according to any one of the claims 1 to 5, wherein said top-coat layer is a cellulose acetobutyrate layer.

7. Screen according to claim 6, wherein said top-coat layer further comprises one or more acrylate type polymers.

8. Screen according to any one of the claims 1 to 5, wherein said top-coat layer is a polystyrene acrylonitrile layer.

9. Screen according to any one of the claims 1 to 5, wherein said top-coat layer is a poly methyl-methacrylate layer.

10. Screen according to any one of the claims 1 to 9, wherein said top-coat layer comprises a filler.

**11.** Screen according to any one of the claims 1 to 10, wherein said storage phosphor layer is a binderless layer.

**12.** Screen according to claim 11, wherein a storage phosphor in said binderless layer is a CsBr:Eu phosphor.

**13.** Screen according to any one of the claims 1 to 12, wherein said outermost top-coat layer is deposited on a para-xylylene layer present as a first top-coat layer, adjacent to said phosphor layer.

**14.** Screen according to any one of the claims 1 to 10, wherein said storage phosphor layer is a powder phosphor layer.

**15.** Screen according to claim 14, wherein in said powder phosphor layer said phosphor is a lanthanide doped alkaline earth fluorohalide type phosphor.

**16.** Screen according to claim 14, wherein in said powder phosphor layer said phosphor is a europium doped barium fluorohalide type phosphor.

**17.** Screen according to any one of the claims 14 to 16, wherein in said powder phosphor layer said phosphor is a $Ba_{1-x}M^{II}{}_xFX$:Eu type phosphor, wherein $0 < x < 1$ and wherein X is one of bromide or iodide or a mixture thereof, and wherein $M^{II}$ is an alkaline earth metal.

**18.** Method of preparing a screen according to any one of the claims 14 to 17, wherein said powder phosphor layer is applied by doctor blade coating.

**19.** Method of preparing a screen according to claim 11 or 12, wherein said binderless phosphor layer is applied by vapor deposition.

**20.** Method of applying an outermost top-coat layer to a screen according to any one of the claims 1 to 17, wherein said outermost layer is applied by doctor blade coating. ■

## Fig. 1

### surface-roughness profiles

**1 (no top-coat)**

**2 (inventive top- topcoat ex.1)**

**3 (comp. top-coat ex.2)**

**4 (comp. top-coat ex. 3)**

**5 (comp. top-coat ex.4)**

**6 (inventive top-coat ex.5)**

**7 (inventive top-coat ex.6)**

**8 (inventive top-coat ex.7)**

**9 (inventive top-coat ex.8)**

**10 (inventive top-coat ex.9)**

**11 (inventive top-coat ex. 10)**

**Fig. 2**

**Fig. 3**

**EP 1 770 719 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Nuclear Instruments and Methods in Physics Research Section A: Accelerators, Spectrometers, Detectors and Associated Equipment,* July 1999, vol. 430, 559-569
- *Med. Phys.,* 1985, vol. 12, 32
- *Med. Phys.,* 1992, vol. 19, 449
- *Radiology,* 1982, vol. 145, 815
- *Nuclear Instruments and Methods in Physics Research Section A: Accelerators, Spectrometers, Detectors and Associated Equipment,* 2002, vol. 490, 614-629

- **BARNES.** *Med. Phys.,* 1982, vol. 9, 656
- *Noise Transfer Function, NTF Med. Phys.,* 1990, vol. 17, 894
- Accuracy of a simple method for deriving the presampled modulation tranfer function of a digital radiographic system from an edge image. *Med. Phys.,* 2003, vol. 30 (9), 2323-2331